# EUROPEAN PATENT APPLICATION

(11) **EP 0 650 163 A2**
(43) Date of publication of application: **26.04.1995**
(21) Application number: 94116467.5
(22) Date of filing: 19.10.1994
(51) Int. Cl.: G11B 19/20, G11B 17/028

(54) **Disk Drive**

(30) Priority: 20.10.1993 JP 262677/93
(71) Applicant: SEIKO EPSON CORPORATION, Shinjuku-ku Tokyo 163 (JP)
(72) Inventor: Yokouchi, Hideya, c/o Seiko Epson Corporation, Nagano-ken, 392 (JP)
(74) Representative: Hoffmann, Eckart, Dipl.-Ing.

(57) **Abstract**

Disclosed is a disk drive for removable storage medium disk cartridges such as commonly known 3.5" floppy disks. A chucking mechanism of the disk drive comprises a spindle (3) fixed to the rotor of a drive motor and adapted to enter into a center hole of a disk hub of the disk cartridge, a rotary plate (4) fixed to said spindle (3), a disk hub support member (3a) fixed to said spindle (3) and protruding from the upper surface of said rotary plate (4) in the axial direction, and a chucking lever (8) carrying a drive pin (5) for engagement with a drive hole of the disk hub. The chucking lever is slidably supported on said rotary plate (4). Latch means (4a) are provided to keep the drive pin (5) substantially immovable in the axial direction, and means (9, 9a) that restrict the movement of the chucking lever (8) on the surface of said rotary plate (4) relative to the latter. The chucking lever (8) and the drive pin (5) are arranged such as to apply a centering force and a rotational force to the disk hub.

## Description

The present invention is generally directed to disk drives for removable storage media disk means such as those corresponding to the Japanese Industrial Standard 90 mm flexible disk cartridges or the commonly used so-called 3.5" floppy disks. More particularly, the invention relates to the chucking mechanism of the disk drive.

As disclosed in US-A-5,121,272 for instance, there are conventional disk drives which are designed to center and rotate a disk of such disk cartridge type. The disk cartridge comprises, within a housing or jacket, a storage medium disk with a disk hub in the center of the disk. The disk hub has a first centrally located center hole and a second eccentrically located drive hole. When mounted to the disk drive, the center hole receives a spindle fixed to the rotor of a drive motor of the disk drive. The diameter of the spindle is smaller than the center hole so that engagement of the spindle with the center hole alone does ensure a definite centered position of the disk in the disk drive. The chucking mechanism of the disk drive includes a drive roller or drive pin arranged to rotate together with the spindle. The drive pin is adapted to be received in the drive hole of the disk hub in order to apply both a rotational force and a centering force to the disk hub. The centering force causes a portion of the edge of the center hole to be urged into abutment against the spindle thereby holding the disk in a definite centered position relative to the spindle axis. The disk hub is typically made from a magnetic material and the disk drive includes a chucking magnet for attracting and holding the disk hub which has the disk attached to it, to a support member of the disk drive, typically a spindle hub fixed to the spindle or integral with it.

US-A-5,121,272 discloses such disk drive in which a spindle hub for supporting the disk hub is fixed to the spindle. A drive roller is mounted to one end of a chucking lever which is disposed below the spindle hub. The drive roller extends through a hole provided in the spindle hub and protrudes from the upper surface of the spindle hub so as to be able to enter into to the drive hole of the disk hub when the latter is inserted into the disk drive. Another end of the chucking lever is pivotally connected to the spindle hub. The pivot between the spring biased chucking lever and the spindle hub is structured such as to allow movement of the drive roller both, in a direction parallel to the spindle axis and a direction perpendicular thereto.

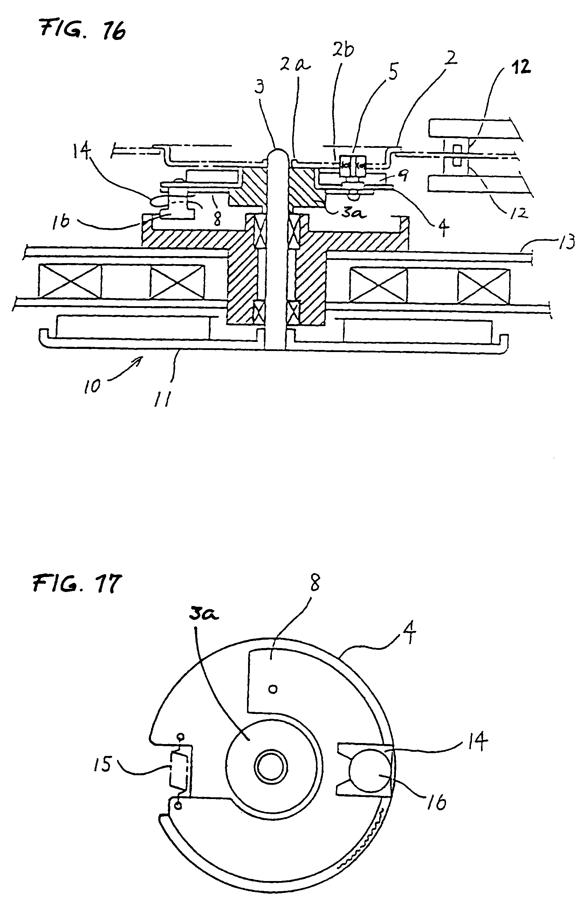

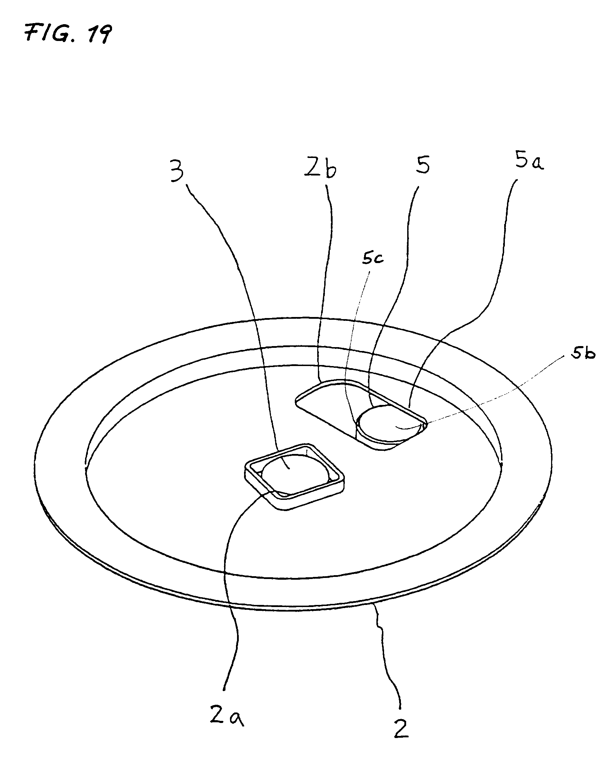

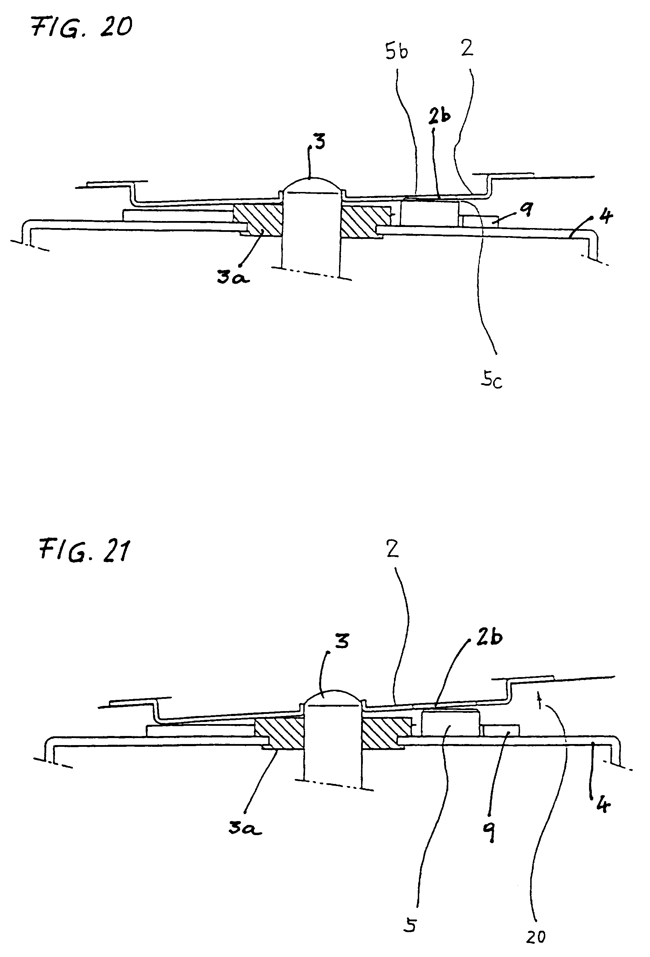

A disk drive having a structure similar to the above mentioned one is disclosed in JP-A-61-52351 and will be explained in more detail in the following with reference to Figs. 15 to 18. Fig. 16 is a cross-sectional view of the disk drive and Figs. 15 and 17 are a plan view and a bottom view, respectively, of its disk chucking mechanism. Fig. 18 is a simplified cross-section of the drive roller area.

As shown in Fig. 16, the disk drive has a frame 13 mounting a drive motor 10 whose rotor 11 is fixed to a spindle 3 rotatable supported in the frame. A spindle hub 3a is fixed to an upper portion of spindle 3 and a rotary plate 4 is fixed to the spindle hub. A chucking lever 8 is disposed below rotary plate 4 and coupled to the latter by means of a pivot pin 16. A spring 14 biases the chucking lever 8 in the direction of the spindle axis (upwardly in Fig. 16). Mounted to the chucking lever 8 is a drive roller 5 which extends through a hole 4' (Fig. 15 and 18) in the rotary plate 4 to the upper side of the rotary plate so as to be able to engage with a disk hub 2 as will be explained. The disk 1 and the disk hub 2 are shown in broken lines in Fig. 16. Pivot pin 16 and the hole in chucking lever 8 through which the pin 16 extends are sized so that chucking lever 8 can pivot slightly in the axial direction as well as in a plane parallel to that defined by the rotary plate 4. A spring 15 (shown in Figs. 15 and 17) biases chucking lever 8 with respect to rotary plate 4 in the circumferential direction. Reference numeral 9 in Figs. 15 and 16 denotes a chucking magnet provided for attracting and holding disk hub 2 to the upper surface of the spindle hub functioning as a support member.

In Fig. 15 the substantially square shaped center hole 2a and the roughly rectangular drive hole 2b of the disk hub 2 are shown in broken lines. When a disk cartridge is inserted into the disk drive, the tapered upper portion of spindle 3 which extends beyond spindle hub 3a enters into center hole 2a of disk hub 2. In this initial state, drive roller 5 is unlikely to be in a position where it can be received within drive hole 2b. If it is not in such position, drive roller 5 will be urged downwardly in the direction of arrow 6 (see Fig. 18), against the biasing force of spring 14. In this state, when drive motor 10 starts driving the spindle, chucking lever 8 and drive roller 5 will rotate together with rotary plate 4 while disk 1 and disk hub 2 will be prevented from rotating due to frictional forces applied by read/write heads 12 (shown in Fig. 16) to the disk and those that may result from a contact between the disk hub and the jacket (not shown) of the disk cartridge housing disk 1 and disk hub 2. The resulting relative movement between the drive roller 5 and the disk hub 2 will cause drive roller 5 to slide along the lower side of disk hub 2 until it gets into registration with the drive hole 2b. At this moment the restoring force of spring 14 moves drive roller 5 upward so that it enters into drive hole 2b.

As shown in Fig. 15, because of its position relative to that of the pivot pin 16, when the drive roller 5 has entered the drive hole 2b thereby chucking the disk hub 2 for rotation with the spindle 3, the force exerted by the drive roller 5 on the disk hub 2 has a component in the direction of arrow 7 and another component in the circumferential (rotational) direction. The first of these two force components results in that two sides of the center hole 2a of the disk hub 2 are pushed against the circumferential surface of the spindle 3 whereby the disk is centered. The other force component applies a rotational force so that the centered disk is now rotated together with the spindle.

With the continuing trend to miniaturize electronic apparatus there is a demand for thin-profile disk drives. The total height of the disk drive is, inter alia, determined by the space required for the disk chucking mechanism. In the prior art explained above, the drive roller is arranged to be moveable in the axial direction and space for accommodating this movement is necessary. Furthermore, space must be provided for the chucking lever which is disposed below the rotary plate. These space requirements of the known chucking mechanisms form an obstacle to a reduction of the total height or thickness of the disk drive.

JP-A-5-144168 discloses a disk drive having a chucking mechanism with a drive pin which is fixed in the axial direction. Reference is made to Figs. 19, 20 and 21 for a more detailed explanation of this prior art. In Figs. 19 to 21 the same reference signs as in Figs. 15 to 18 are used for denoting same or corresponding elements. Fig. 19 is a perspective view only showing the disk hub 2 with its holes 2a and 2b, the spindle 3 and the drive pin 5 of the disk drive. Figs. 20 and 21 are cross-sectional views of the chucking mechanism illustrating different relative positions between the disk hub 2 and the drive pin 5 with the relative position illustrated in Fig. 20 being the same as that shown in Fig. 19.

As has been mentioned before, when a disk cartridge is inserted into a disk drive, the probability is low that the drive pin 5 of the chucking mechanism of the disk drive is at a position in registration with the drive hole 2b of the disk hub. Typically, the drive pin 5 and the drive hole 2b will be completely misaligned so that the lower side of the disk hub 2 comes to lie on the end face of the drive pin 5. In rare cases, however, the relative position between the disk hub 2 and the drive pin 5 upon insertion of the disk cartridge into the disk drive may be such as illustrated in Fig. 19 where due to a slight misalignment an edge of the drive hole 2b lies on a marginal portion 5a of the end face 5b of the drive pin 5. This causes the disk hub 2 to assume an oblique position as illustrated. Due to this oblique position another portion of the end face of the drive pin 5 is received in the drive hole 2b as shown in Fig. 20. In such case, when the spindle 3 starts rotating, the drive pin 5 and the rotary plate 4 rotate together with the spindle relative to the disk hub 2 which is prevented from rotating by the frictional forces mentioned above. Since the edge of the end face 5b of the drive pin 5 is bevelled, the edge of the drive hole 2b slides up the bevel 5c thereby lifting the disk hub 2 as indicated by arrow 20 in Fig. 21, so that the drive pin 5 is fully disengaged from drive hole 2b and allowed to slide under the disk hub 2. Due to the relative rotational movement between the drive pin 5 and the disk hub 2, after the spindle 3 has rotated through slightly less than 360°, the drive pin 5 will get into a position allowing it to enter the drive hole 2b, resulting in normal chucking.

In this latter prior art, in which the drive pin does not change its position in the axial direction, the disk hub is pushed in the direction of arrow 20 in Fig. 21, when the drive pin and the drive hole 2b are slightly misaligned as explained above. During such lifting, the disk hub is held down by the jacket of the disk cartridge (not shown in the drawing), and a great force is required for pushing the disk hub upward. This great force in turn requires a sufficient torque of the drive motor since an insufficient motor torque would result in the rotation of the spindle being stopped and would thus cause a chucking failure.

Another prior art disk drive having a chucking mechanism with a drive pin that does not move in the axial direction is disclosed in US-A-4,873,585. This prior art employs a chucking lever disposed below a rotary plate and carrying a drive pin which extends through an opening provided in the rotary plate. The end of the chucking lever opposite to the drive pin is coupled to the spindle in such a manner that the drive pin, within the boundaries defined by the opening in the rotary plate, is moveable both in a radial direction and in a circumferential direction. In this prior art, even though the drive pin is fixed in the axial direction, additional space is required by the chucking lever disposed below the rotary plate.

The invention as claimed is intended to remedy the drawbacks of the prior art. Its object is to design a disk drive having a chucking mechanism that requires less space than the prior art chucking mechanisms, has a simple structure and an improved reliability.

This object is achieved by a disk drive as claimed in claim 1.

Preferred embodiments of the invention are subject-matter of the dependent claims.

According to the present invention, although the chucking lever can freely move in the planar direction of the rotary plate, which may be the rotor itself, it does not move in the axial direction of the drive pin. Consequently, the space requirement of the chucking mechanism in the thickness direction can be reduced, making it possible to obtain thin-profile disk drives. Furthermore, the number of components can be reduced because no spring means are required for biasing the chucking lever in order to obtain the centering force for the disk hub, and no adjustment of spring forces is needed.

Additionally, by appropriately shaping and dimensioning the drive pin no or only little force is required to push up the disk hub, thus preventing chucking failures and improving reliability without requiring a greater torque of the drive motor.

Ways of carrying out the invention are described in detail below with reference to the drawings which diagrammatically illustrate only specific embodiments, and in which:
- Fig. 1: is a perspective exploded view of the disk chucking mechanism according to a first embodiment of the present invention,
- Fig. 2: is a plan view of the disk chucking mechanism of an embodiment similar to the first embodiment,
- Figs. 3 to 5: are plan views similar to Fig. 2 additionally showing the disk hub, each Figure illustrating a different state during the chucking process,
- Fig. 6: is a partial cross-sectional view illustrating a latch mechanism,
- Fig. 7: is a plan view, corresponding to Fig. 2, of a second embodiment of the invention,
- Fig. 8: is a partial cross-sectional view of the second embodiment,
- Fig. 9: is a plan view, corresponding to Fig. 5, which illustrates a modified shape of the drive pin,
- Fig. 10: is a plan view of the disk chucking mechanism according to a third embodiment of the present invention,
- Fig. 11: is a partial cross-sectional view along line A-A in Fig. 10,
- Fig. 12: is a plan view of the disk chucking mechanism of a fourth embodiment of the present invention,
- Fig. 13: is a partial cross-sectional view along line B-B in Fig. 12,
- Fig. 14: is a partial cross-sectional view of the disk chucking mechanism of the first embodiment for explaining a preferred configuration of the upper end face of the drive pin,
- Figs. 15, 16 and 17: are a plan view, a cross-sectional view and a bottom view, respectively, of a prior art disk chucking mechanism,
- Fig. 18: is a simplified cross-sectional view of the prior art disk chucking mechanism, and
- Figs. 19 to 21: are a plan view and cross-sectional views, respectively, illustrating another prior art disk chucking mechanism.

Throughout the Figures the same reference numerals are used to denote same or corresponding elements.

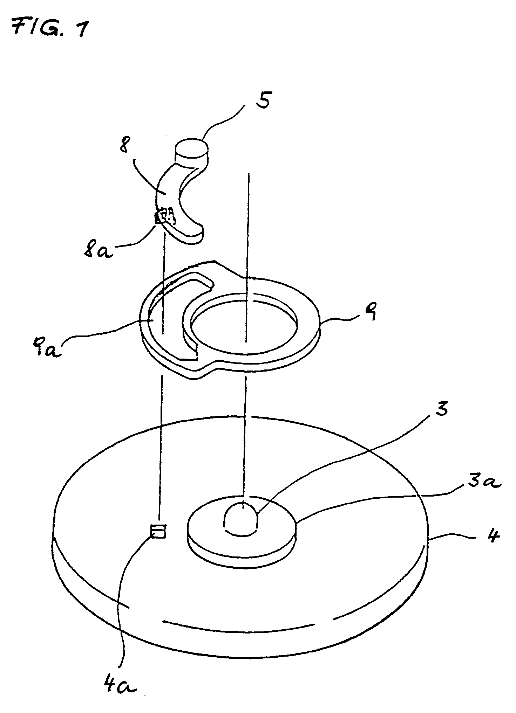

A first embodiment of the present invention will now be explained with reference to Figs. 1 to 6. Since the invention is concerned with the disk chucking mechanism of a disk drive, only the elements related to the disk chucking are shown in the Figures.

Fig. 1 is a perspective exploded view of the disk chucking mechanism illustrating a rotary member or rotary plate 4, a spindle 3, a spindle hub 3a, a chucking magnet 9 and a chucking lever 8 carrying a drive pin 5. The spindle hub 3a is fixed to the spindle and provides a support for the disk hub which is not shown in Fig. 1. The rotary plate 4 is part of the rotor in this embodiment and is fixed to the spindle hub 3a such as by caulking. The chucking magnet 9, which is preferably a plastic magnet, is fixed to the spindle hub 3a, for instance it is glued to the perimeter of the spindle hub.

As shown in the Figure, the chucking magnet 9 has a center hole 9b for receiving the spindle hub 3a and a hole 9a for receiving the chucking lever 8.

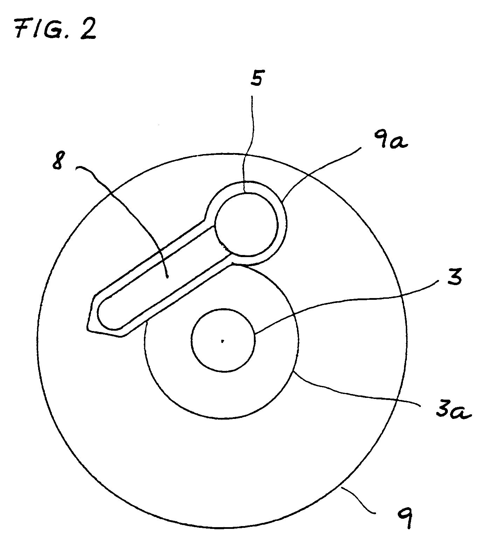

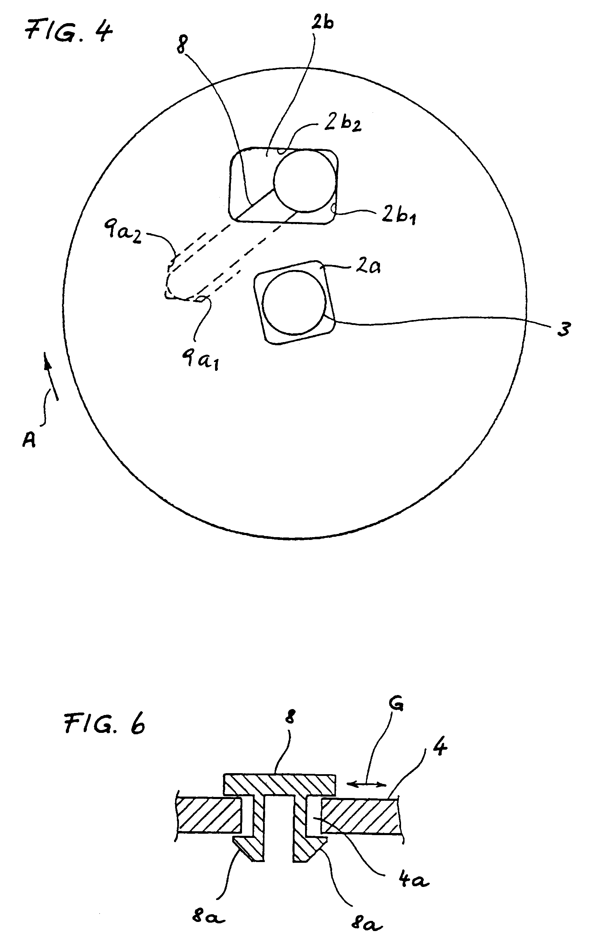

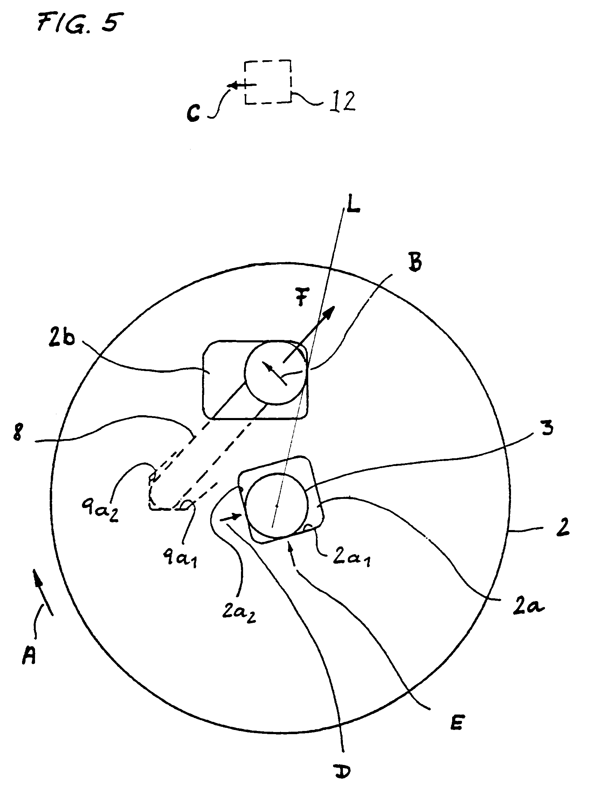

As depicted in Fig. 2, in the assembled state, the chucking magnet 9 is disposed on the upper surface of rotary plate 4 with the spindle hub 3a received in its center hole 9b. The chucking lever 8 is also disposed on the upper surface of rotary plate 4 inside hole 9a of chucking magnet 8. Hole 9a and chucking lever 8 are sized such that chucking lever 8 is slidable on the upper surface of rotary plate 4 within a restricted range defined by the hole 9a. Latch claws 8a are provided on the lower surface of chucking lever 8 to engage a hole 4a provided in the rotary plate 4 as is best shown in Fig. 6. As will be understood, the latch claws 8a prevent the chucking lever 8 from disengaging from rotary plate 4, the hole 4a and the latch claws 8a being sized to allow the above mentioned movement of the chucking lever 8 in the plane defined by the upper surface of rotary plate 4 (indicated by arrow G). Thus, while the chucking lever 8 is substantially immovable in the axial direction, it is moveable within the said plane, this movement being restricted to the area defined by the hole 9a of the chucking magnet. With this structure of the latch means comprising the latch claws 8a in cooperation with the lower surface of the rotary plate 4 surrounding hole 4a, some clearance in the axial direction will be inevitable. It is preferable to keep this clearance to the minimum possible. Incidentally, Fig. 6 illustrates one example for the latch means and it will be understood by those skilled in the art that other configurations of the latch means may be employed that provide the intended function.

Note that in Figs. 2 to 5, 9 and 12 the chucking lever 8 and the hole 9a in the chucking magnet 9 are shown straight while they are curved in Fig. 1. While the curved shape of Fig. 1 is preferable, with the straight shape which is shown in Figs. 2 to 5 for reasons of simplification of the drawings, substantially the same results will be achieved.

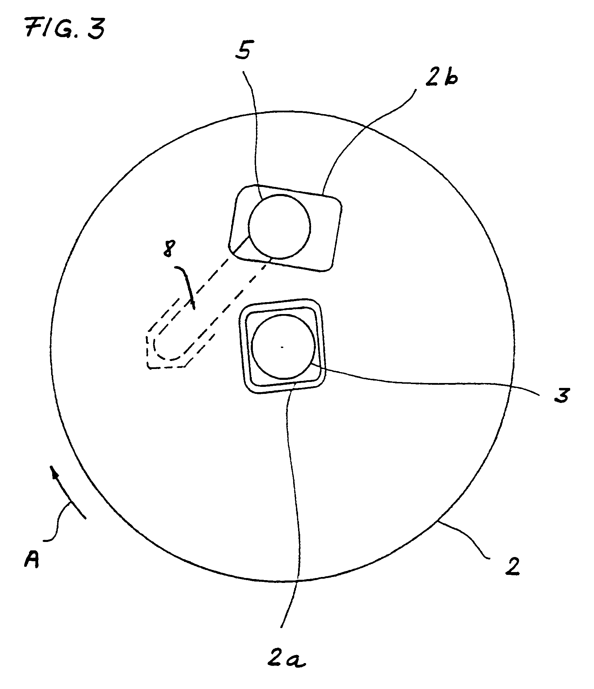

The operation of the chucking mechanism according to this embodiment will now be explained with reference to Figs. 3 to 5.

When a disk cartridge is inserted into the disk drive, the spindle 3 will enter into the center hole 2a of the disk hub 2 (note that in Figs. 3 to 5 only the disk hub 2 of the disk cartridge is shown). However, in this initial state, the probability is low that the drive pin 5 fixed to the chucking lever 8 will be in a position to enter the drive hole 2b of the disk hub 2. Thus, when the spindle 3, the spindle hub 3a, the chucking magnet 9 and the chucking lever 8 start rotating together with rotary plate 4, the upper end face of the drive pin 5 will first slide on the lower side of the disk hub 2 prior to achieving the state shown in Fig. 3 where the drive pin 5 reached a position allowing it to enter the drive hole 2b. Note that during this initial rotation of the rotary plate 4 the drive pin 5 slides along the disk hub 2 because the frictional force applied by the drive pin 5 to the disk hub 2 is smaller than frictional forces caused by the cartridge and the read/write heads as has been explained earlier with respect to the prior art.

Once the drive pin 5 has entered the drive hole 2b, the relative rotation between the chucking lever 8 and the disk hub 2 continues, until the drive pin 5 comes to abut against two edge faces 2b₁ and 2b₂ of the drive hole 2b, and the end of the chucking lever 8 opposite to drive pin 5 is shifted into abutment against edge faces 9a₁ and 9a₂ of the hole 9a in chucking magnet 9. This state is illustrated in Fig. 4.

As shown in Fig. 5, as the rotation of rotary plate 4, spindle 3, spindle hub 3a and chucking magnet 9 continues in the direction of arrow A, a frictional force applied by the read/write heads 12 to the disk and indicated by arrow C in Fig. 5 will cause chucking lever 8 to turn in the direction of arrow B about an eccentric pivot axis, parallel to the spindle axis, defined by the engagement of the chucking lever 8 with the edge faces 9a₁ and 9a₂. This movement of the chucking lever 8 in turn, causes the disk hub 2 to be moved relative to the spindle 3 (in the directions of arrows D and E), until the spindle engages the two edge faces 2a₁ and 2a₂ of the center hole 2a. This completes the centering of the disk hub 2 as well as the chucking. Further continued rotation of rotary plate 4 will rotate the disk hub 2 and the disk attached to it around the spindle axis.

As indicated in Fig. 5, when the disk hub 2 is thus being rotated, an acute angle is formed between the direction of the force F applied by the drive pin 5 to the disk hub 2 and a line L connecting the center of the spindle 3 with the contact point between the drive pin 5 and the disk hub in the circumferential direction. Thus, the force applied by the drive pin is composed of two components, one in the circumferential direction and another one in the radial direction. By virtue of this arrangement the disk hub 2 is positively chucked between the spindle 3 on the one hand and the drive pin 5 on the other hand in a way to apply both, a driving force and a centering force to the disk hub.

In this embodiment the end face of the chucking lever is shown to be convex and a pivot is formed when the convex surface is made to contact the two edge faces 9a₁ and 9a₂, i.e. by a two-point contact. As will be appreciated by those skilled in the art, the structure may be modified, for instance, in such a way that a one-point contact is established between the end face of the chucking lever and the chucking magnet to serve as said pivot. In any case, a pivot is formed between the chucking lever and the chucking magnet about which the chucking lever is made to turn thereby creating the centering force without requiring a biasing spring. Also, no pivot pin is necessary since the pivot is formed by urging an end of the chucking lever into engagement with a portion of the edge of the hole 9a. This simplifies the structure and, in particular, the assembly.

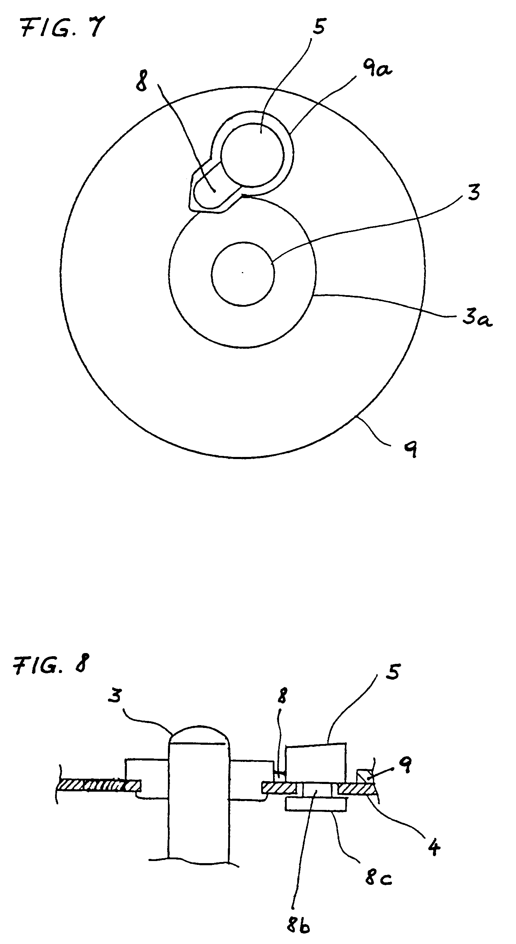

Figs. 7 and 8 illustrate a second embodiment of the present invention. Fig. 7 is a plan view corresponding to that of Fig. 2, and Fig. 8 is a partial cross-sectional view. This second embodiment is similar to the first embodiment and differs only with respect to the configuration of the chucking lever and its drive pin.

As is easily seen from a comparison between Figs. 2 and 7, the chucking 8 of the second embodiment is substantially shorter than the chucking lever 8 of the first embodiment. As shown in Fig. 8, a hole 4b is provided in the rotary plate 4 at a position below the drive pin 5. An abutment plate 8c is arranged below the rotary plate 4 and connected, via an intermediate part 8b received in the hole 4b, to the chucking lever 8 (or the drive pin 5). The abutment plate 8c may for instance be the head of a screw whose shaft 8b is threadingly engaged with the drive pin 5. Alternatively, elements 8c and 8b may be integral with the drive pin 5 and/or the chucking lever 8. The elements 8b and 8c on the one hand and the hole 4b on the other hand are sized in such a way as to allow movement of the chucking lever 8 and the drive pin 5 in the plane defined by the upper surface of the rotary plate 4 while restricting an axial movement of the drive pin 5 and preventing the chucking lever 8 from disengaging from the rotary plate 4. Since the abutment plate 8c in the second embodiment provides the function of the latch claws 8a of the first embodiment, it goes without saying that the latch claws 8a are not required in this second embodiment. As will further be appreciated, since the chucking lever 8 and the drive pin 5 of the second embodiment are arranged to move in substantially the same way as the chucking lever 8 and the drive pin 5 of the first embodiment, the operation of the second embodiment is the same as that of the first embodiment.

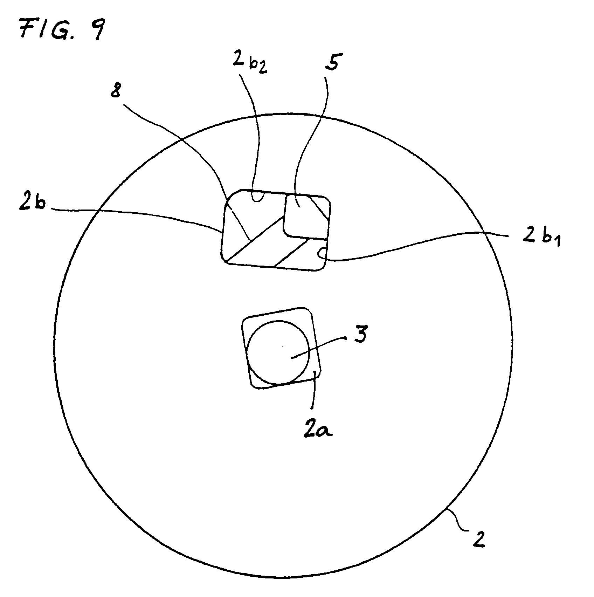

A modification applicable to the first and the second embodiment is illustrated in Fig. 9 showing a plan view corresponding to Fig. 5. While in the first and second embodiments the drive pin is shown to be substantially cylindrical, it has a roughly triangular cross-sectional shape in the modification shown in Fig. 9. Two corners of the triangular shape are cut-off to provide abutment faces for abutting against the edge faces 2b₁ and 2b₂, respectively, of the drive hole 2b. Thus, with this modification the contact area between the drive pin 5 and the disk hub 2 is increased whereas the general operation is the same as that of the first and second embodiments. Incidentally, while in the first and second embodiments the drive pin 5 is shown to be an integral part of the chucking lever 8, it will be understood that the drive pin may be a separate element fixed to the chucking lever and may even be a drive roller as it is used in the prior art explained above.

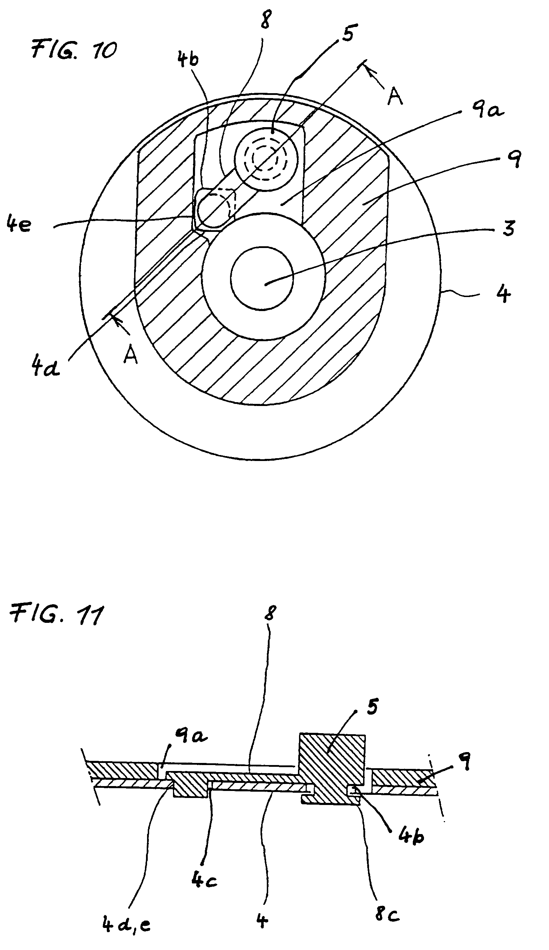

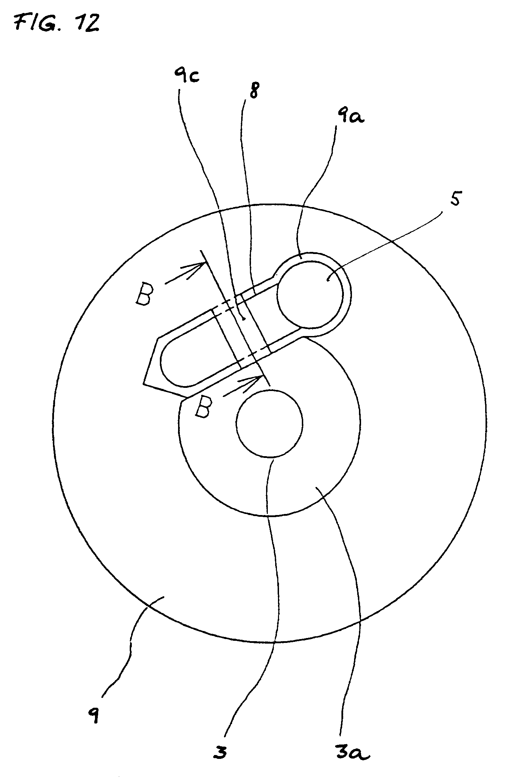

Figs. 10 and 11 illustrate a third embodiment of the present invention with Fig. 10 being a plan view corresponding to Figs. 2 and 7 and Fig. 11 being a partial cross-sectional view along line A-A in Fig. 10.

This third embodiment of the invention differs from the previously explained embodiments in that, even though the chucking lever 8 and the drive pin 5 are disposed within a hole 9a of the chucking magnet 9, the range of movement of the chucking lever 8, in the plane defined by the rotary plate 4, is restricted by direct engagement of the chucking lever or members fixed to it with the metallic rotary plate 4 rather than by engagement with the chucking magnet. In other words, the hole 9a in the chucking magnet 9 is sized such that, in none of their possible positions, the chucking lever 8 and the drive pin 5 get into contact with the chucking magnet 9.

As shown in Fig. 11, for restricting an axial movement of the drive pin 5 and preventing the chucking lever from disengaging from the rotary plate 4, the same means are provided as have been explained with respect to the second embodiment and are illustrated in Fig. 8. At the end of the chucking lever 8 opposite to the drive pin 5, a protrusion 8d extends from the lower side of the chucking lever and is received in a hole 4b provided in the rotary plate 4. The size and shape of the hole 4a as well as the size and shape of the hole 4b are such as to enable the chucking lever 8 to perform substantially the same movement as in the first embodiment.

In this third embodiment, since the chucking lever is in direct engagement with the metallic rotary plate 4, the wear in areas 4d and 4e, which are edge faces of the substantially square shaped hole 4b, is smaller than that experienced at the edge faces 9a₁ and 9a₂ in the first embodiment where the chucking lever 8 engages the chucking magnet 9. Thus, since the chucking magnet preferably is a plastic magnet whose wear resistance is smaller than that of the metallic material of the rotary plate, the durability of the chucking mechanism according to the third embodiment is improved compared to that of the first embodiment. Yet, the third embodiment achieves the same advantage in that the chucking lever is positioned within a hole of the chucking magnet 9 and, thus, does not require any additional space in the axial direction of the disk drive.

If the rotary plate 4 is equipped with an index detector (not shown in the drawing) for detecting the revolution of the spindle 3, it is possible to achieve a very high positional accuracy of the index detector and the drive pin 5 in the rotational direction. This is made possible because the positions of both, the index detector and the chucking lever 8 in the rotational direction are determined only by the accuracy of the rotary plate 4.

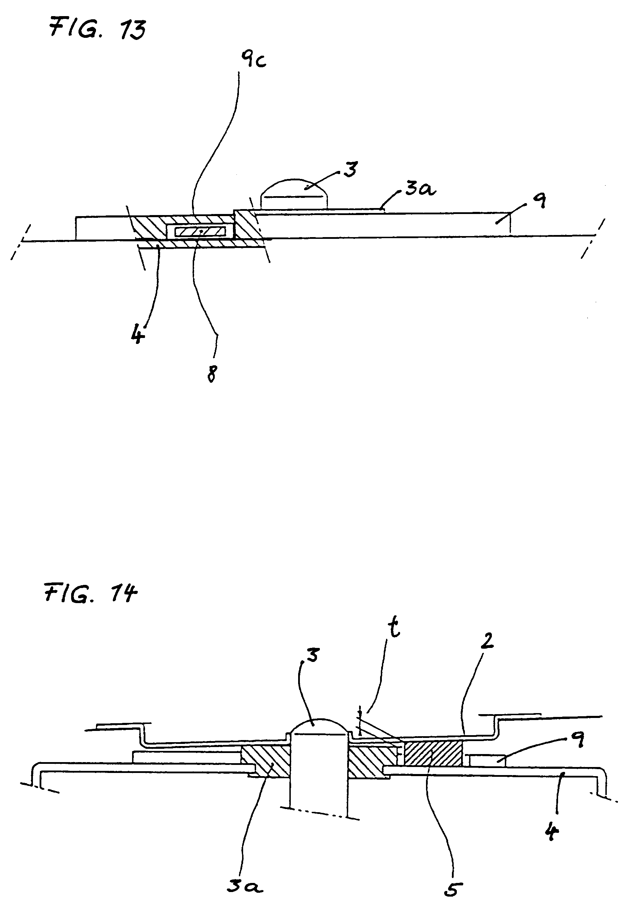

Figs. 12 and 13 illustrate a fourth embodiment of the invention. Fig. 12 is a plan view of the disk chucking mechanism and Fig. 13 is a cross-sectional view along the line B-B in Fig. 12.

The fourth embodiment is similar to the first embodiment and differs only in the means employed to prevent the chucking lever 8 from disengaging from the rotary plate 4. As is best shown in Fig. 13, the hole 9a is formed in such a way as to leave a bridge portion 9c overlying the chucking lever 8 and thereby preventing it from becoming disengaged from the rotary plate 4. It will be understood that the bridge portion 9c is preferably designed to restrict the axial movement of the chucking lever 8 to a minimum.

In the embodiments of the invention described so far, different means are used for restricting the movement of the chucking lever in the axial direction and to prevent it from becoming disengaged from the rotary plate 4. While each of these means may be sufficient to provide the desired function, two or more of them may be combined to become even more effective.

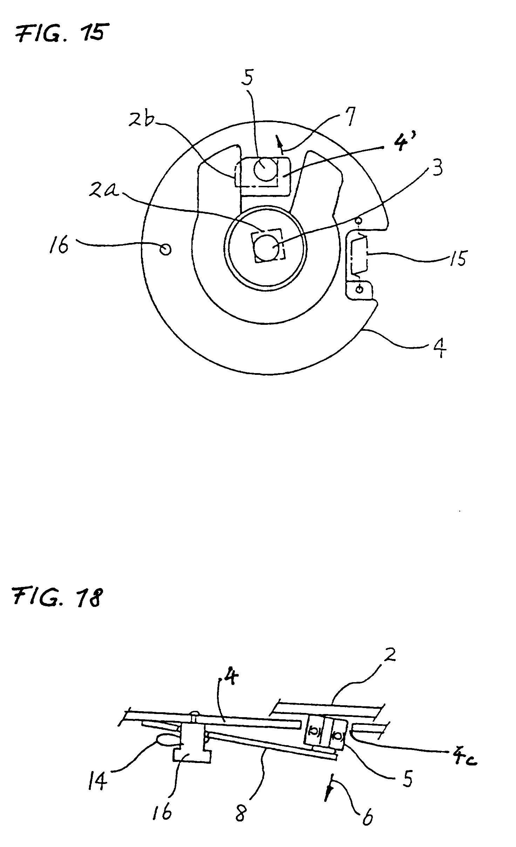

As shown in Fig. 8, the plane defined by the most upper portion of the drive pin 5 is oblique. Where the plane declines toward the spindle 3, the angle formed between this plane and the axis of the spindle is preferably set to be substantially equal to the angle formed between the disk hub 2 and the axis of the spindle in a case where the disk cartridge is inserted into the disk drive, the spindle 3 is received in the center hole 2a of the disk hub 2 but the drive pin 5 and the drive hole 2b are misaligned. Fig. 14 is a cross-sectional view which illustrates this condition.

When the drive pin 5 of any of the preceding embodiments is configured in this way, a problem of the prior art that has previously been explained with respect to Figs. 19 and 20 is avoided to occur. Even if the drive pin 5 and the drive hole 2b happen to get into a positional relationship corresponding to that illustrated in Fig. 19, because of the declined upper side of the drive pin 5, no portion of the drive pin enters the drive hole that could either be caught by an edge of the drive hole or tend to further lift the disk hub 2 in response to a movement of the drive pin relative to the disk hub. In other words, this modification allows to prevent incomplete chucking without requiring an increased torque of the drive motor.

Even if the oblique plane mentioned above is made to decline toward the direction of the movement of the drive pin 5 rather than the spindle, the above mentioned problem of the prior art may be overcome. If the top surface of the drive pin is inclined in this way, the edge of the drive hole will gradually slide up the oblique end face of the drive pin thereby gradually lifting the disk hub. This is advantageous and allows a smaller motor torque compared to the prior art where the edge of the drive hole has to slide up the relatively steep bevel causing a sudden increase in the motor load. Therefore, the oblique surface is set so that it is lower either on the side of the spindle 3, in the advancing direction of the drive pin 5, or in the middle of these two positions. In this way, incomplete chucking can be prevented and a good chucking device can be obtained.

While the top surface of the drive pin 5 may be made flat, as shown in Figs. 8 and 14, alternatively, the top surface can be convex or concave. The slope which the disk hub 2 assumes as long as the drive pin 5 does not enter the drive hole is smallest when the top surface of the drive pin 5 is flat. When the top surface of the drive pin 5 is made convex, the inclination of the disk hub 2 increases because the lower side of the disk hub 2 will lie on the protruding area of the convex surface. It is to be noted that in case of a convex or concave top surface of the drive pin the configuration is preferably such that the outermost peripheral line of the convex or concave portion defines a base plane of the convex or concave portion, which is inclined in the same way as the flat surface of Figs. 8 and 14.

It has been empirically proven that in case of a convex top surface of the drive pin 5 the maximum protrusion over the base plane should be 0.5 mm or less; otherwise, the drive hole of the disk hub will tend to latch onto the oblique top surface.

Furthermore, the amount by which the drive pin 5 protrudes from the surface of the spindle hub 3a (dimension t in Fig. 14) must be controlled to 0.7 mm or less. Otherwise, the incline of the disk hub 2 will increase when the disk hub 2 sits on the top surface of the drive pin 5, resulting in a situation in which the jacket (not shown in the drawing) presses hard on the disk hub 2, increasing the frictional force in this area. This will result in insufficient rotational torque of the spindle motor, making it impossible to drive and rotate the disk hub 2, as explained in the section discussing conventional technologies. To reduce this frictional force between the disk hub 2 and the jacket, careful attention must be paid to the combined total of the height of the protrusion, if any, in the top surface of the aforementioned drive pin 5 and the amount by which the drive pin 5 protrudes from the spindle hub 3a.

As explained above, with the disk chucking mechanism of the invention, the spatial requirement of the disk drive can be reduced by restricting the movement of the chucking lever, which is installed on the rotating plate which in turn is installed on the spindle, in the axial direction of the drive pin. Furthermore, the chucking mechanism can be configured using a unit chucking lever by installing an anti-disengagement device in the rotational support area, thus reducing the component count, improving assembly efficiency, and achieving small size and thin profile for the motor. These improvements ultimately result in great benefit in terms of achieving ultra-small size and ultra-thin profile for the disk drive. The shape of the drive pin is an important element in configuring a chucking device that can offer this benefit.

In the embodiments explained above the chucking lever is slidably supported on the surface of the rotary plate within a hole provided in the chucking magnet. Thus, the space required for the chucking magnet in the axial direction is effectively used also to accommodate the chucking lever, i.e. no extra space is required for the chucking lever. However, the chucking lever need not necessarily be supported directly on the rotary plate but may for instance be slidably supported on the chucking magnet or another intermediate member rotating together with the rotary plate. For instance, instead of providing the hole 9a in the chucking magnet which exposes the surface of the rotary plate, a recess could be provided and the chucking lever slidably supported on the bottom of the recess. In such case the chucking lever would have the same degree of freedom of movement as in the embodiments above and yet received in the chucking magnet such as not to increase the total height.

## Claims

1. A disk drive for removable storage medium disk cartridges which have, housed in a jacket, a storage medium disk (1) and a disk hub (2) fixed to a central portion of the disk (1), the disk hub (2) being provided with a center hole (2a) and an eccentrically located, substantially rectangular drive hole (2b), said disk drive comprising a chucking mechanism for chucking the disk means when inserted into the disk drive, said chucking mechanism comprising:
a spindle (3) fixed to the rotor of a drive motor and adapted to enter into said center hole (2a),
a rotary plate (4) fixed to or integral with said spindle (3), and having a surface extending substantially perpendicularly to the spindle (3),
a support member (3a) fixed to or integral with said spindle (3) and protruding from the upper surface of said rotary plate (4) in the axial direction for providing support for said disk hub (2),
a chucking lever (8) carrying a drive pin (5) for engagement with said drive hole (2b), the chucking lever being supported directly or via an interposed member on said rotary plate (4) to be slidable in a plane substantially perpendicular to the axis of said spindle,
latch means (4a, 8a; 4b, 8b, 8c; 9c) for keeping said drive pin (5) substantially immovable in the axial direction of the spindle (3), and
means (9, 9a; 4b, 8b, 4c, 8d) for restricting the movement of the chucking lever (8) in said plane relative to said rotary plate,
wherein said chucking lever (8) and the drive pin (5) are arranged such that when said spindle (3) is rotated and the disk (1) driven by virtue of engagement between the disk hub (2) and the drive pin (5), an acute angle is formed between the direction of the force (F) applied by the drive pin to the disk hub (2) and the line (L) connecting the center of the spindle (3) to the point at which the drive pin (5) contacts the disk hub (2) in the circumferential direction.

2. The disk drive of claim 1, wherein said rotary plate (4) is formed by the rotor of the drive motor.

3. The disk drive of claim 1 or 2, wherein said chucking mechanism includes a chucking magnet (9) disposed on said rotary plate (4), the chucking lever (8) being disposed within a hole (9a) or a recess provided in the chucking magnet.

4. The disk drive of claim 3, wherein the chucking magnet (9) forms said restricting means, the hole (9a) or recess in the chucking magnet defining the range of movement of the chucking lever (8).

5. The disk drive of any one of the preceding claims, wherein the plane defined by a peripheral line along which the top surface of the drive pin (5) is joined to its outer surface is slanted with respect to the axis of the spindle (3), and the amount by which said drive pin (5), at the lower side of said slanted plane, protrudes from said support member is no more than 0.7 mm.

6. The disk drive of claim 5, wherein the slanted plane declines towards the spindle (3), towards the drive pin advancing direction, or towards a direction intermediate therebetween.

7. The disk drive of claim 6, wherein the slanted plane declines towards the spindle (3), and the angle formed between this plane and the axis of the spindle (3) is substantially equal to the angle formed between the disk hub (2) and the axis of the spindle (3) when the lower surface of disk hub (2) engages the drive pin top surface.

8. The disk drive of claim 7, wherein the difference between the two angles is within ±2 degrees.
